# EUROPÄISCHE PATENTSCHRIFT

(11) **EP 2 168 418 B1**
(45) Veröffentlichungstag und Bekanntmachung des Hinweises auf die Patenterteilung: **17.04.2019**
(21) Anmeldenummer: 10150200.3
(22) Anmeldetag: 10.02.2006
(51) Int. Cl.: A01C 9/02, A01B 49/06, A01B 63/114

(54) **Kombinierte landwirtschaftliche Maschine**
Combined agricultural machine
Machine agricole combinée

(30) Priorität: 17.02.2005 DE 102005007521; 03.05.2005 DE 102005020563; 03.08.2005 DE 102005037114
(43) Veröffentlichungstag der Anmeldung: 31.03.2010
(62) Teilanmeldung aus: 06708189.3
(73) Patentinhaber: Heiss (Jun.), Andreas, 85104 Pförring-Dötting (DE)
(72) Erfinder: Heiss (Jun.), Andreas, 85104 Pförring-Dötting (DE)
(74) Vertreter: Schlief, Thomas P.

(56) Entgegenhaltungen:
- EP-A1- 0 014 622
- DE-A1- 2 735 105
- DE-A1- 19 710 036
- NL-C2- 1 014 691

## Beschreibung

Die vorliegende Erfindung betrifft eine kombinierte landwirtschaftliche Maschine, welche eine Pflanzeinrichtung sowie eine nachgeordnete Einrichtung zum Enddammaufbau umfasst. Die Pflanzeinrichtung ist insbesondere eine Kartoffellegeeinrichtung und weist wenigstens einen Vorratsbehälter, eine diesem zugeordnete Entnahmeeinrichtung sowie eine Setzschar auf. Weiterhin weist die Maschine ein in Fahrtrichtung vor der Pflanzeinrichtung angeordnetes Lockerungswerkzeug zur Saatbeetbereitung auf sowie eine nachgeordnete Einrichtung zum Enddammaufbau in Form eines Dammformblechs auf. Die Maschine ist als Aushebemaschine zum Anschluss an einen Schlepper ausgeführt.

Derartige Maschinen, die den Arbeitsgang der Pflanzung sowie den Dammaufbau in einer Maschine kombinieren, sind aus dem Stand der Technik bekannt. Insbesondere sind hierbei Kartoffellegemaschinen bekannt, welche mit verschiedenen Werkzeugen zum Enddammaufbau ausgerüstet sind, z. B. mit Häufelkörpern im alleinigen Einsatz, mit Häufelkörpern mit Stabwalzen oder auch in Kombination mit einem Dammformblech. Die Saatbeetvorbereitung muss hierbei in einem eigenen Arbeitsgang beispielsweise mittels einer Kreiselegge durchgeführt werden. Derartige Maschinen sind jedoch nur auf leichten bis mittleren Böden einsetzbar, während auf schwereren Böden keine ausreichend kleinen Erdfraktionen zum Dammaufbau erzielt werden können. Auf schwereren Böden muss daher der Enddamm in einem weiteren Arbeitsgang beispielsweise mittels einer Dammfräse aufgebaut werden. Durch das nachträgliche Fräsen der Dämme in einem weiteren Arbeitsgang kann ein seitlicher Versatz auftreten, so dass die Lage der Pflanzknollen erheblich von der Dammmitte abweichen kann, was zu seitlichem Herauswachsen der Knollennester führen kann. Dieses Problem tritt in besonders starkem Maße bei der Bearbeitung eines Seitenhanges auf.

Zur Lösung dieses Problems beschreibt die DE 197 10 036 C2 eine Legemaschine, bei welcher an einem Maschinenrahmen unmittelbar hinter den Furchenziehern eine Dammfräse angeordnet ist. Durch die Zusammenfassung von Legemaschine und Dammfräse zu einer einzigen kombinierten Maschine tritt das Problem des seitlichen Versatzes nicht mehr auf. Weiterhin konnten mit dieser Vorrichtung bereits zwei Arbeitsgänge zu einem Arbeitsgang zusammengefasst werden, was eine Kraftstoffersparnis und eine Erhöhung des Ernteertrags durch Verminderung des durch Sonneneinstrahlung bedingten Grünanteils der Ernte ergibt. Derartige Maschinen sind auch für schwere Böden einsetzbar. Ein vorgeschalteter Arbeitsgang zur Saatbeetbereitung ist jedoch auch bei dieser Vorrichtung nötig. Durch das anschließende Überfahren des vorbereiteten Bodens mit einer Legemaschine, mit einer Maschine zur Dammformung oder auch mit der beschriebenen kombinierten Maschine, wird jedoch der bereits gelockerte Boden wieder verdichtet.

Die NL 1 014 691 C2 zeigt eine kombinierte Kartoffelpflanzmaschine, welche die Arbeitsschritte Saatbeetbereitung, Pflanzen und Dammformen in einem einzigen Arbeitsgang ermöglicht. An einem Rahmen der Maschine sind hierzu eine Pflanzeinrichtung, Fräsmittel und eine Einrichtung zur Dammformung angeordnet. Zur Abstützung der Maschine verfügt die Maschine über ein Fahrwerk, wobei der Rahmen vertikal beweglich auf Stützrädern abgestützt ist. Die Höhe des Rahmens in Bezug auf die Stützräder kann somit korrigiert werden, wenn durch einen Sensor ein tieferes Einsinken der Maschine in den Boden registriert wird. Die Arbeitstiefe der Maschine kann durch dieses aufwändige System konstant gehalten werden. Durch die Stützräder kann es jedoch auch hier zu einer ungleichmäßigen Verdichtung des Bodens kommen, was sich nachteilig auf das Wachstum der Kartoffeln auswirken kann.

Aufgabe der Erfindung ist es daher, eine Maschine vorzuschlagen, welche eine Bündelung von Arbeitsgängen ermöglicht und darüber hinaus den Boden in nur geringem Maße verdichtet.

Die Aufgabe wird gelöst mit einer kombinierten landwirtschaftlichen Maschine gemäß Anspruch 1.

Eine kombinierte landwirtschaftliche Maschine umfasst eine Pflanzeinrichtung, insbesondere eine Kartoffellegeeinrichtung, sowie eine nachgeordnete Einrichtung zum Enddammaufbau. Die Pflanzeinrichtung besteht aus wenigstens einem Vorratsbehälter, einer diesem zugeordneten Entnahmeeinrichtung und einer Setzschar. In Fahrtrichtung vor der Pflanzeinrichtung ist ein Lockerungswerkzeug zur Saatbeetbereitung angeordnet. Durch die Anordnung eines Lockerungswerkzeuges vor der Pflanzeinrichtung in einer Maschine kann ein dem Pflanzen vorgeschalteter Arbeitsgang zur Bodenvorbereitung entfallen. Die Maschine ist als Aushebemaschine zum Anschluss an einen Schlepper ausgeführt. Ein seitlicher Versatz, welcher zu einer außermittigen Ablage des Pflanzgutes in den Dämmen führt, ist durch die Anordnung der Werkzeuge in einer Maschine ebenfalls ausgeschlossen. Die Krümelstruktur des Bodens kann hierdurch ebenfalls verbessert werden. Erfindungsgemäß ist der Schlepper in Arbeitsstellung im Wesentlichen nur durch das Gewicht des Vorratsbehälters belastet. Durch eine günstige Konstruktion kann hierbei eine Gewichtsverteilung erreicht werden, bei welcher das Gewicht der angebauten Maschine den Schlepper kaum belastet, während die Einrichtung zum Enddammaufbau vorteilhaft belastet wird.

Eine derartige Gewichtsverteilung wird erfindungsgemäß dadurch erreicht, dass die Maschine über kein eigenes Fahrwerk verfügt. Die Tiefenführung der Werkzeuge kann hierbei beispielsweise über Tasträder erreicht werden. Da keine die Maschine abstützenden Räder mehr angeordnet sind, kann eine Nachverfestigung des bereits gelockerten Bodens ebenfalls nicht mehr stattfinden..

Eine bevorzugte Ausführungsform der Maschine sieht vor, dass die Entnahmeeinrichtung ein umlaufendes Becherwerk ist. Hierdurch kann eine besonders kompakte Bauweise der Maschine erreicht werden.

Weiterhin ist es vorteilhaft, wenn das Lockerungswerkzeug als Kreiselegge ausgeführt ist. Hierdurch kann auch bei schweren Böden eine ausreichende Lockerung des Bodens erreicht werden. Ebenso ist jedoch auch eine Ausführung mit einem Zinkenrotor möglich.

Eine andere vorteilhafte Weiterbildung der Erfindung sieht vor, dass der Pflanzeinrichtung Häufelkörper oder Zudeckscheiben zugeordnet sind, welche den zu bildenden Damm bereits vorformen. Da durch die erfindungsgemäße Maschine ohne Fahrwerk jedoch keine Nachverdichtung des Bodens mehr stattfindet, sind diese nicht zwingend erforderlich.

Nach der Erfindung ist zum Enddammaufbau ein Dammformblech nach der Pflanzeinrichtung angeordnet. Hierdurch können besonders feste und glatte Dämme erzielt werden, wodurch optimale Wachstumsbedingungen geschaffen werden. Ist das Dammformblech in seiner Neigung verstellbar, können Dammhöhe und die Flankenneigung eingestellt werden.

Eine andere Weiterbildung der Erfindung sieht vor, dass die Setzschar als Doppelscheibenschar ausgebildet ist. Pflanzenreste im Boden können durch die Scheibenschar zerschnitten und in den Boden eingearbeitet werden. Ist der Doppelscheibenschar zusätzlich ein Kammbrecher zugeordnet, kann eine besonders exakte Ablage des Pflanzgutes erfolgen.

Ebenfalls vorteilhaft ist es, wenn die Setzschar höhenverstellbar mit der Einrichtung zum Enddammaufbau, insbesondere einem Dammformblech, verbunden ist. Hierdurch kann auf einfache Weise erreicht werden, dass die Saatgutablage stets in der gleichen Tiefe bezogen auf den Dammscheitel erfolgt.

Nach der Erfindung ist es vorteilhaft, wenn vor dem Lockerungswerkzeug eine Walze zum Zerkleinern des Bodens angeordnet ist. Auch hierdurch kann eine exakte Tiefenführung über die gesamte Bearbeitungsbreite und eine vorteilhafte Zerkrümelung des Bodens und Zerkleinerung von Kluten erreicht werden.

Eine andere vorteilhafte Ausführungsform der Erfindung sieht vor, dass das Lockerungswerkzeug zum Einsatz in andere Maschinen aus der Maschine entnehmbar ist. Das Lockerungswerkzeug kann hierbei unabhängig von der kombinierten Pflanzmaschine zur Bodenvorbereitung auch für andere Anbauverfahren verwendet werden.

Ebenfalls vorteilhaft ist es, wenn die Pflanzeinrichtung absattelbar an der Maschine angeordnet ist. Hierdurch ist es sowohl möglich, verschiedene Pflanz- bzw. Aussaateinrichtungen auf die Maschine aufzusatteln, als auch das Lockerungswerkzeug der Maschine alleine zu verwenden.

Zum Absatteln der Pflanzeinrichtung von der Maschine ist es besonders vorteilhaft, wenn der Vorratsbehälter mit der Entnahmeeinrichtung, der Setzschar und der Einrichtung zum Enddammaufbau eine Baueinheit bildet. Diese kann dann für sich aus der kombinierten landwirtschaftlichen Maschine entnommen werden und durch eine andere Aussaateinrichtung ersetzt werden.

Vorteilhaft ist es auch, wenn als Pflanzeinrichtung ein Einzelkornsaatgerät an der Maschine angeordnet oder auf diese aufsattelbar ist. Hierzu ist es vorteilhaft, wenn der Vorratsbehälter mit der Entnahmeeinrichtung eine austauschbar an der kombinierten Maschine angeordnete Einheit bildet.

Beinhaltet das Einzelkornsaatgerät ein Dammformblech, kann die Aussaat ebenfalls in einem Arbeitsgang mit dem Dammaufbau erfolgen. Ist eine Säschar des Einzelkornsaatgerätes in einer Ausnehmung des Dammformbleches angeordnet, kann die Saat direkt in den entstehenden Damm eingebracht werden, wodurch eine sehr exakte Tiefenführung erreicht werden kann.

Zusätzlich können an der Maschine weitere Werkzeuge, insbesondere als Vorlaufwerkzeuge, angeordnet sein. Vorteilhaft ist es beispielsweise, wenn als Vorlaufwerkzeug eine Einebnungsschiene oder Federzinken angeordnet sind. Ebenso kann als zusätzliches Werkzeug ein Düngerstreuer angeordnet sein. Dieser ist vorzugsweise über die gesamte Arbeitsbreite angeordnet, so dass der Dünger wegeabhängig dosiert und eingearbeitet wird. Hierdurch kann ein weiterer Arbeitsgang eingespart werden, was den Kraftstoffverbrauch weiter senkt. Darüber hinaus kann der Dünger nahezu direkt an der Saatgutablagestelle ausgebracht werden, was zu einer verbesserten Wirkung führt.

Eine besonders vorteilhafte Weiterbildung der Erfindung sieht vor, dass die Zufuhr von Pflanzgut in einen Schöpfraum der Pflanzeinrichtung in Abhängigkeit von dem Füllstand in dem Schöpfraum steuerbar ist. Vorteilhafterweise weist die Pflanzeinrichtung hierzu eine Einrichtung zur Erfassung des Füllstandes in dem Schöpfraum auf. Hierdurch kann ein stets gleichbleibender Vorrat an Pflanzgut in dem Schöpfraum gewährleistet werden, wodurch eine sehr gleichmäßige Belegung der einzelnen Legebecher der Entnahmeeinrichtung erreicht wird. Doppelbelegungen und Fehlstellen werden hierdurch zuverlässig vermieden.

Ebenfalls vorteilhaft ist es, wenn die Pflanzeinrichtung eine Fördereinrichtung zum Transport des Pflanzgutes aus dem Vorratsbehälter in den Schöpfraum umfasst. Ist hierbei bei einer mehrreihigen Maschine jeweils zwei Reihen eine gemeinsame Fördereinrichtung zugeordnet ist, lässt sich eine besonders gleichmäßige Förderung von Pflanzgut in die Schöpfräume der einzelnen Reihen erreichen.

Weitere Vorteile der Erfindung sind im Zusammenhang mit den nachfolgenden Ausführungsbeispielen beschrieben. Es zeigen:
- **Figur 1**: eine schematische Darstellung einer kombinierten Maschine, die nicht unter den Erfindungsgegenstand fällt, in einer Seitenansicht in gezogener Ausführung,
- **Figur 2**: eine schematische Darstellung einer erfindungsgemäßen Maschine als Aushebemaschine und
- **Figur 3**: eine weitere schematische Darstellung einer Maschine, die nicht unter den Erfindungsgegenstand fällt.
- **Figur 4**: eine weitere schematische Darstellung einer Maschine, die nicht unter den Erfindungsgegenstand fällt, bei welcher als Pflanzeinrichtung eine Aussaateinrichtung für Getreide angeordnet ist,
- **Figur 5**: eine schematische Darstellung eines Dammformbleches, an welchem eine Schar höhenverstellbar befestigt ist.

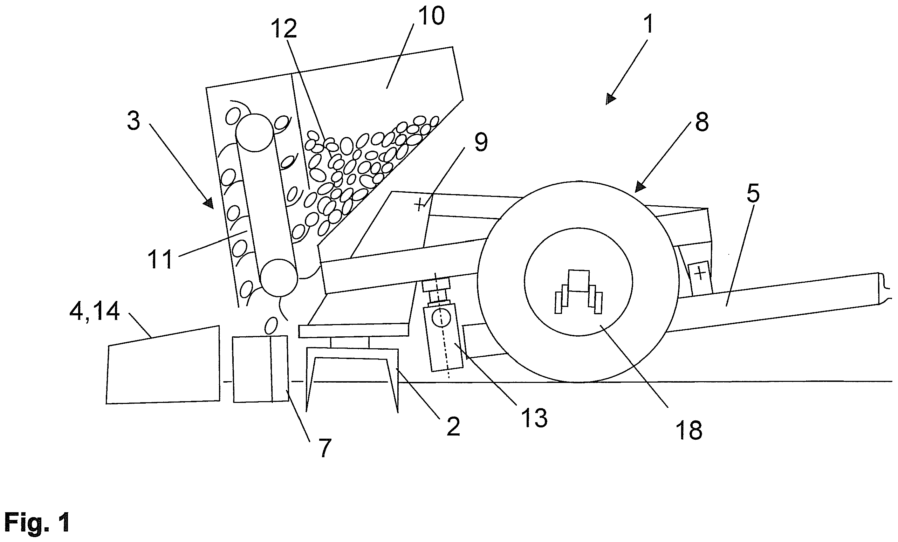

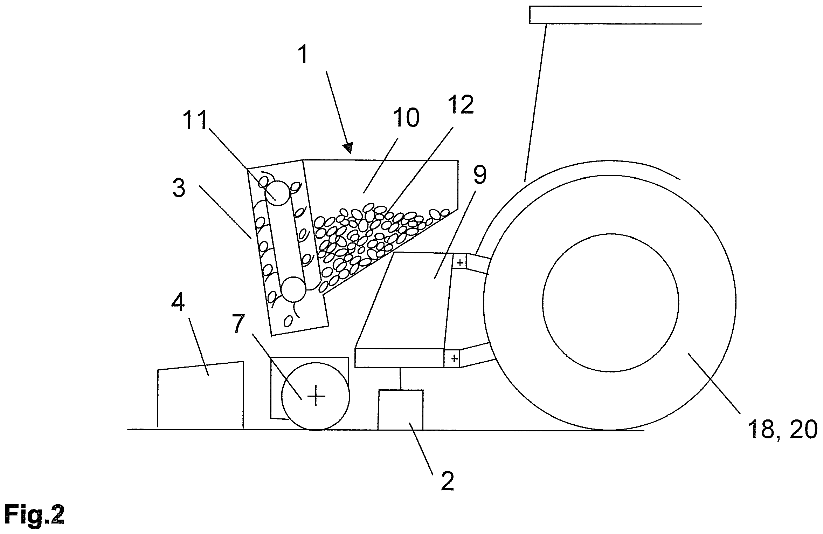

Figur 1 zeigt eine kombinierte landwirtschaftliche Maschine, die nicht unter den Erfindungsgegenstand fällt, in gezogener Ausführung in einer Seitenansicht. Die Maschine 1 weist ein Lockerungswerkzeug 2, eine Pflanzeinrichtung 3 sowie eine Einrichtung zum Enddammaufbau 4 auf. Die Einrichtungen sind an einem gemeinsamen Tragrahmen 5 angeordnet, wodurch die Arbeitsgänge Saatbeetbereitung, Pflanzung und Enddammaufbau in einem Arbeitsgang zusammengefasst werden können. Vorliegend ist die kombinierte Maschine 1 als gezogene Maschine ausgeführt, welche über ein eigenes Fahrwerk 8 verfügt. Eine erfindungsgemäße angebaute Aushebemaschine ist in Figur 2 gezeigt. Vorliegend ist als Lockerungswerkzeug 2 eine Kreiselegge vorgesehen, welche eine besonders gute Saatbeetbereitung ermöglicht. Die Egge ist hierbei mit einer herkömmlichen Anbauvorrichtung 9 versehen, so dass sie aus der Maschine ausgebaut und zum Einsatz in andere Maschine entnommen werden kann. Dem Lockerungswerkzeug 2 in Fahrtrichtung nachgeordnet folgt eine Pflanzeinrichtung 3, welche vorliegend als Becherlegemaschine ausgeführt ist. Ein Hydraulikzylinder 13 dient dem Ausheben der Maschine.

Die Pflanzeinrichtung 3 besteht aus einem hydraulischen Kippbunker als Vorratsbehälter 10 für das Saatgut, einem umlaufenden Becherwerk 11 zum Vereinzeln und Fördern des Saatgutes, sowie einer Setzschar 7. Das Pflanzgut, insbesondere Saatkartoffeln 12, wird über das Becherwerk 11 in einer von der Schar 7 gezogenen Furche abgelegt. Die Schare können beispielsweise als höhenverstellbare Doppelscheibenschare ausgeführt sein, andere Ausführungen sind jedoch ebenso möglich. Eventuell vorhandene Pflanzenreste, z. B. aus der Winterbegrünung, werden durch die Scheibenschare zerschnitten und verursachen somit keine Verstopfungen. Um den zwischen den beiden Scheiben der Schar noch verbleibenden Erdsteg zu brechen und eine mittige Knollenablage zu erreichen, ist zwischen den beiden Scheiben ein höhenverstellbarer Kammbrecher angeordnet (hier nicht dargestellt). Durch einen Hydraulikzylinder kann der Vorratsbehälter in seiner Stellung gekippt werden, so dass eine konstante Förderung des Pflanzgutes 12 möglich ist.

Vorliegend ist zum Enddammaufbau ein Dammformblech 14 der Pflanzeinrichtung 3 nachgeordnet, welches für einen stabilen Enddammaufbau in einem Arbeitsgang mit Saatbeetbereitung und Pflanzung sorgt.

In der gezeigten Ausführung ist die Pflanzeinrichtung 3 der Maschine durch eine Becherlegeeinrichtung gebildet. Ebenso kann jedoch auch statt der Becherfördereinrichtung eine Riemenfördereinrichtung angebaut sein.

Figur 2 zeigt eine schematische Darstellung einer erfindungsgemäßen Maschine 1 als Aushebemaschine. Die Maschine 1 ist vorliegend mit einem Schlepper kombiniert und verfügt über kein eigenes Fahrwerk 8. Die Maschine 1 kann hierdurch ebenfalls besonders kompakt ausgeführt werden. Die Maschine 1 ist als Aushebemaschine an einen Schlepper anbaubar, wobei durch entsprechende Anordnung der Komponenten der Maschine 1 erreicht wird, dass das Gewicht des Anbaus in Arbeitsstellung weitgehend neutral gegenüber dem Schlepper verhält. Im wesentlichen ist der Schlepper nur durch das Gewicht des Vorratsbehälters 10 belastet, der Großteil des Anbaugewichts stützt sich auf dem Dammformblech 14 ab. Hierdurch wird das Dammformblech 14 bzw. die Einrichtung zum Enddammaufbau 4 vorteilhaft belastet, was zu einem verbesserten Dammaufbau führt. Insbesondere bei einem geringen Füllstand des Vorratsbehälters 10 wirkt sich diese Anordnung positiv aus.

Für Straßenfahrt kann die Maschine 1 durch die Anbauhydraulik des Schleppers ausgehoben werden. Durch die kompakte Anordnung und die Möglichkeit des Anschlusses an einen herkömmlichen Schlepper kann diese Maschine 1 preisgünstig ausgeführt werden und ist somit auch für kleine Betriebe nutzbar.

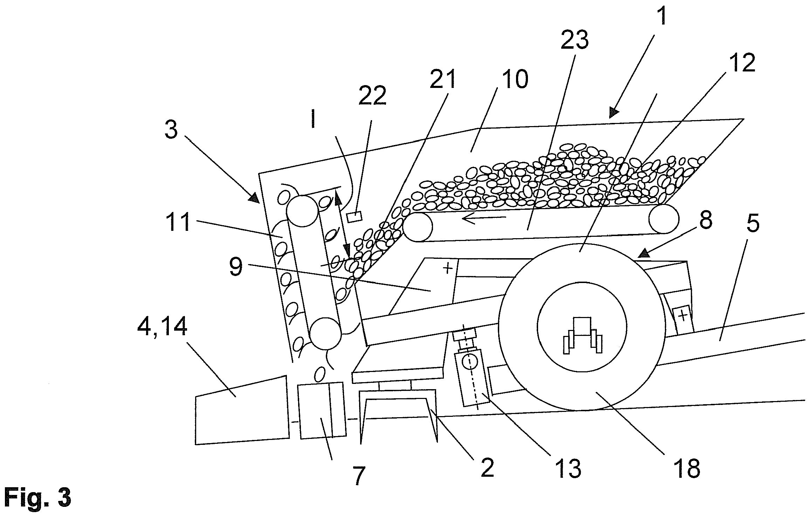

Eine weitere Darstellung einer Maschine, die nicht unter den Erfindungsgegenstand fällt, mit einer verbesserten Pflanzeinrichtung 3 ist in Figur 3 schematisch dargestellt. Die Pflanzeinrichtung 3 gemäß der vorliegenden Darstellung besteht aus einem fest angeordneten Vorratsbehälter 10, welchem ein Schöpfraum 21 für das Pflanzgut 12 zugeordnet ist. Als Entnahmeeinrichtung weist die Pflanzeinrichtung 3 auch hier ein umlaufendes Becherwerk 11 auf. Die Pflanzeinrichtung 3 weist eine Einrichtung zur Erfassung des Füllstandes in dem Schöpfraum 21 auf, welche beispielsweise als optischer Sensor 22 ausgeführt ist. Mittels dieser Einrichtung ist es möglich, die Zufuhr von Pflanzgut 12 in den Schöpfraum 21 in Abhängigkeit von der Höhe des Füllstands in dem Schöpfraum 21 zu steuern, wodurch eine im wesentlichen gleichbleibende, optimale Füllstandshöhe erreicht wird. Weiterhin ist hierdurch auch die Länge I der Rüttelstrecke stets gleich lang. Durch das Rütteln des Pflanzgutes 12 auf der Rüttelstrecke werden Mehrfachbelegungen der einzelnen Legebecher der Entnahmeeinrichtung verhindert.

In bekannten Vorrichtungen des Standes der Technik war die Höhe des Füllstandes im Schöpfraum 21 abhängig von dem Vorrat an Pflanzgut 12 in dem Vorratsbehälter 10. Hierdurch war auch die Länge der Rüttelstrecke I von dem restlichen Vorrat an Pflanzgut abhängig. Bei hohem Füllstand im Schöpfraum 21 führte dies durch eine zu kurze Rüttelstrecke zu Doppelbelegungen der einzelnen Legebecher der Entnahmeeinrichtung, während bei niedrigem Füllstand Fehlstellen zu erwarten waren. Eine Korrektur der Einstellungen des Rüttelaggregates während des Betriebes war nur sehr eingeschränkt möglich.

In der gezeigten Darstellung wird die gleichbleibende Füllstandshöhe in dem Schöpfraum 21 durch eine Fördereinrichtung 23 erreicht, welche die Zufuhr von Pflanzgut 12 in den Schöpfraum 21 unterbricht, sobald ein voreingestellter, optimaler Füllstand erreicht ist. Eine optische Kontrolle der Belegung der Entnahmeeinrichtung durch den Bediener wie im Stand der Technik ist hierdurch nicht mehr nötig. Kontrolle und Belegung der Legebecher kann vom Schlepperfahrer direkt während der Fahrt eingesehen werden.

Um bei mehrreihigen Maschinen 1 eine möglichst gleichmäßige Verteilung des Pflanzgutes 12 auf die einzelnen Reihen zu erreichen, sind vorzugsweise zwei oder mehr Fördereinrichtungen 23 nebeneinander in dem Vorratsbehälter 10 angeordnet. Insbesondere ist es vorteilhaft, wenn der Schöpfraum 21 zweier Reihen durch eine gemeinsame Fördereinrichtung 23 beschickt wird. Hierdurch ist bei geringem baulichen Aufwand eine weitgehend gleichmäßige Versorgung aller Schöpfräume 21 der Maschine 1 gewährleistet.

Im gezeigten Beispiel ist als Entnahmeeinrichtung ein Becherlegewerk 11 vorgesehen, ebenso kann jedoch auch ein Riemenlegewerk angeordnet sein. Weiterhin kann auch eine Fördereinrichtung 23 je Reihe bzw. Entnahmeeinrichtung angeordnet sein, was jedoch den baulichen Aufwand und die Kosten erhöht.

Da die erfindungsgemäße Maschine 1 keine den Boden nachverdichtenden Räder aufweist, ist es möglich, die Arbeitsgänge Saatbeetbereitung, Pflanzung und Dammformung in einem Arbeitsgang in einer Maschine zusammenzufassen. Hierdurch ergibt sich eine erhebliche Kraftstoffersparnis sowie eine erhebliche Ersparnis an kostenintensiven Arbeitsstunden. Da ein separater vorgeschalteter Lockerungsvorgang zur Saatbeetbereitung entfällt, ergibt sich weiterhin eine Ersparnis an Schlepperstunden. Der Ernteertrag kann durch die erfindungsgemäße Maschinenkombination gesteigert werden, da eine gleichbleibende Pflanztiefe und exakte mittige Ablage des Pflanzgutes 12 erfolgt. Insbesondere an Seitenhängen kann ein außenmittiger Versatz der Ablegestelle des Pflanzgutes 12 nicht mehr auftreten. Durch die stets mittige Knollenablage kann ein Grünanteil der Ernte nahezu vollständig vermieden werden.

Da die Werkzeuge an einem Traggestell 5 angeordnet sind, kann darüber hinaus bei der kombinierten Maschine 1 auch eine Kostenersparnis gegenüber Einzelmaschinen erzielt werden. Daneben kann durch die Zusammenfassung dreier Arbeitsgänge in einer Maschine ein Witterungsrisiko weitgehend ausgeschaltet werden, da kein zeitlicher Versatz zwischen den einzelnen Arbeitsgängen mehr vorhanden ist. Da durch die kombinierte Maschine 1 keine wesentliche Bodenverdichtung mehr stattfindet, kann darüber hinaus auch der Ertragsanteil des Vorbeetes erheblich gesteigert werden.

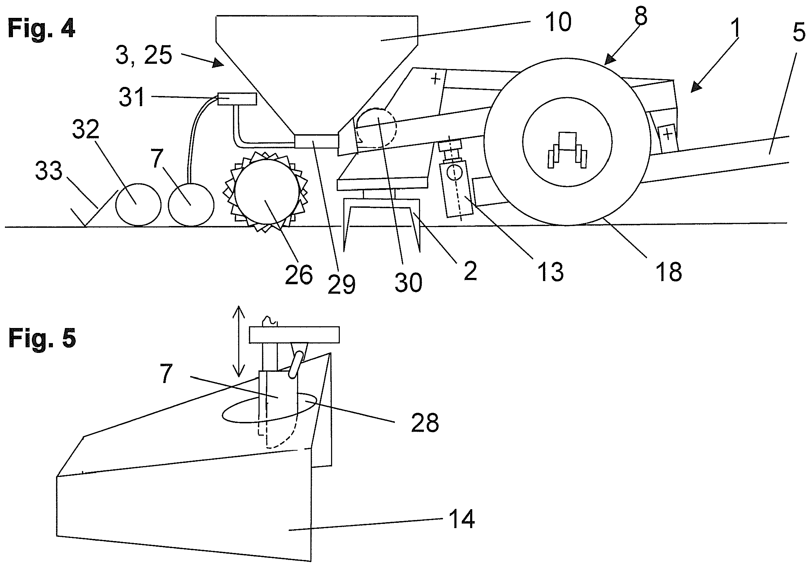

Figur 4 zeigt eine weitere Darstellung einer Maschine, die nicht unter den Erfindungsgegenstand fällt, bei welcher als Pflanzeinrichtung 3 eine Aussaateinrichtung 25, vorliegend eine Drillmaschine zur Getreideaussaat, angeordnet ist. Die kombinierte landwirtschaftliche Maschine 1 ist hierbei derart ausgeführt, dass über eine entsprechende Aufsattelvorrichtung oder sonstige Anbauvorrichtungen verschiedene Pflanzeinrichtungen bzw. Aussaateinrichtungen an die Maschine angebaut werden können. Anstelle der in Figur 1 dargestellten Baueinheit, welche einen Vorratsbehälter 10, die Entnahmeeinrichtung 11, das Dammformblech 14 und die Setzschar 7 umfasst, ist gemäß der vorliegenden Darstellung eine Drillmaschine zur Getreideaussaat an die Maschine 1 angebaut. Die Drillmaschine umfasst gemäß der vorliegenden Darstellung ebenfalls einen Vorratsbehälter 10, eine Entnahmeeinrichtung für das Saatgut bestehend aus einem Dosiergerät 29 sowie einem Gebläse 30, welches das Saatgut zu einem Verteilerkopf 31 fördert, und eine Säschiene mit mehreren Säscharen 7. Bei entsprechender konstruktiver Abstimmung der einzelnen Bauteile aufeinander kann hierbei auch eine herkömmliche Aussaateinrichtung an die kombinierte landwirtschaftliche Maschine 1 angebaut oder auf diese aufgesattelt werden. Die Aussaateinrichtung 25 umfasst weiterhin eine Packerwalze 26, um eine für die Getreideaussaat erforderliche Rückverfestigung des Bodens zu erreichen. Zusätzlich sind gemäß der vorliegenden Darstellung eine Druckrolle 32 sowie ein Striegel 33 in der Aussaateinrichtung 25 beinhaltet, um die Saatfurche zu schließen.

Ebenso ist es jedoch möglich, andere Pflanz- bzw. Aussaateinrichtungen 3, 25 an die Maschine 1 anzubauen. Insbesondere ist es vorteilhaft, Einzelkornsaatgeräte an die kombinierte landwirtschaftliche Maschine 1 anzubauen. Hierzu kann beispielsweise das Dammformblech 14, evtl. mit einer an ihm angeordneten Säschar 7, austauschbar an der Maschine 1 angeordnet sein, so dass je nach Erfordernissen verschiedene Dammformbleche eingesetzt werden können.

Figur 5 zeigt eine schematische Darstellung eines Dammformbleches 14, bei welchem eine Setzschar 7 verstellbar mit diesem verbunden ist. Ist die Setzschar 7 höhenverstellbar an der Einrichtung zum Enddammaufbau 4 angeordnet, kann eine besonders exakte Saatgutablage in einer konstanten Tiefe erreicht werden.

Gemäß der Darstellung der Figur 5 ist hierbei die Setzschar oder Säschar 7 in einer Ausnehmung 28 des Dammformbleches 14 angeordnet. Hierdurch ist es möglich, das Saatgut in den entstehenden Damm einzubringen, wodurch eine äußerst exakte Tiefenführung erreicht werden kann. Insbesondere ist diese Anordnung vorteilhaft in Verbindung mit einem Einzelkornsaatgerät. Zunehmend setzt es sich durch, beispielsweise auch Mais auf Dämmen anzubauen, da hierdurch ein weitgehend konstantes und gleichmäßiges Temperaturniveau innerhalb des Dammes erreicht werden kann. Mit dem erfindungsgemäßen Dammformblech 14 ist es somit möglich, in einem Arbeitsgang einen Damm aufzubauen sowie das Saatkorn einzulegen, wobei zugleich auch ein Düngemittel bzw. in der Maissaat Phosphor mit in den Boden eingebracht werden kann.

Die Vorteile der erfindungsgemäßen kombinierten landwirtschaftlichen Maschine 1 kommen somit auch in Verbindung mit einem Aussaatgerät für Getreide oder einem Gerät zur Einzelkornaussaat voll zum Tragen, da ein mehrmaliges Überfahren des zu bearbeitenden Bodens entfällt und keine Verdichtung im Bereich der Fahrspuren des Schleppers entsteht. Hierdurch kann ein besonders gleichmäßiges Aufgehen der Saat erreicht werden und der Ernteertrag gesteigert werden. Zugleich sind durch die vielseitigen Einsatzmöglichkeiten der kombinierten landwirtschaftlichen Maschine 1 oft nur Einzelteile der anzubauenden Maschinen erforderlich, so dass hierdurch auch eine Kostenersparnis möglich ist.

Die Erfindung ist nicht durch die dargestellten Ausführungsbeispiele beschränkt. So kann die Maschine statt des dargestellten Becherförderwerks ein Riemenförderwerk eingesetzt werden. Ebenso kann mit der Maschine neben Kartoffeln auch anderes Pflanzgut bzw. Sämereien, beispielsweise Möhren oder Zuckerrüben, gepflanzt werden. Die Maschine ist nicht nur als Pflanzmaschine, sondern auch als Maschine zum Dammformen einsetzbar.

Vorteilhaft ist bei der erfindungsgemäßen Maschine, dass nach dem Dammaufbau keine weiteren Arbeitsgänge mehr erforderlich sind. Dadurch können die Dämme in beliebiger Anzahl und auch in beliebigen Abständen angeordnet werden. Es besteht keine Gefahr einer nachträglichen Beschädigung der Dammflanken oder des entstehenden Produkts. Beim Anbau im Beetverfahren können hierdurch auch breitere Reifen als üblich verwendet werden. Zusätzlich können zur Erleichterung des Enddammaufbaus Häufelscheiben oder Zudeckscheiben der Pflanzeinrichtung zugeordnet sein. Weitere Abwandlungen im Rahmen der Patentansprüche fallen ebenfalls unter die Erfindung.

## Patentansprüche

1. Kombinierte landwirtschaftliche Maschine (1) umfassend eine Pflanzeinrichtung (3), insbesondere eine Kartoffellegeeinrichtung, mit wenigstens einem Vorratsbehälter (10), einer diesem zugeordneten Entnahmeeinrichtung und einer Setzschar (7), ein in Fahrtrichtung vor der Pflanzeinrichtung (3) angeordnetes Lockerungswerkzeug (2) zur Saatbeetbereitung sowie eine nachgeordnete Einrichtung zum Enddammaufbau (4), vorzugsweise ein Dammformblech, wobei die Maschine (1) als Aushebemaschine zum Anschluss an einen Schlepper ausgeführt ist, wobei die Maschine als Aushebemaschine ohne Fahrwerk ausgebildet ist, **dadurch gekennzeichnet, dass** in Arbeitsstellung der Maschine (1) der Schlepper im Wesentlichen nur durch das Gewicht des Vorratsbehälters (10) belastet ist und der Großteil des Gewichts der angebauten Maschine (1) auf der Einrichtung zum Enddammaufbau (4) abgestützt ist, und dass vor dem Lockerungswerkzeug (2) eine Walze zum Zerkleinern des Bodens angeordnet ist.

2. Maschine nach einem der vorherigen Ansprüche, **dadurch gekennzeichnet, dass** das Lockerungswerkzeug (2) als Kreiselegge oder Zinkenrotor ausgeführt ist.

3. Maschine nach einem der vorherigen Ansprüche, **dadurch gekennzeichnet, dass** die Setzschar (7) verstellbar mit der Einrichtung zum Enddammaufbau (4), insbesondere einem Dammformblech (14), verbunden ist.

4. Maschine nach einem der vorherigen Ansprüche, **dadurch gekennzeichnet, dass** das Lockerungswerkzeug (2) und/oder die Pflanzeinrichtung (3) absattelbar an der Maschine (1) angeordnet ist oder aus der Maschine (1) entnehmbar ist.

5. Maschine nach einem der vorherigen Ansprüche, **dadurch gekennzeichnet, dass** die Zufuhr von Pflanzgut (12) in einen Schöpfraum (21) der Pflanzeinrichtung (3) in Abhängigkeit von dem Füllstand in dem Schöpfraum (21) steuerbar ist.

6. Maschine nach Anspruch 5, **dadurch gekennzeichnet, dass** die Pflanzeinrichtung (3) eine Einrichtung zur Erfassung des Füllstandes in dem Schöpfraum (21) aufweist.

## Claims

1. Combined agricultural machine (1) comprising a planting device (3), especially a potato-planting device having at least one storage container (10), an extraction device associated with it and a setting plough (7), a loosening tool (2) for seedbed preparation arranged in travelling direction before the planting device (3) as well as a downstream mounted end damming device (4), preferably a dam-forming sheet metal, wherein the machine (1) is constructed as a lifting machine for connection to a tractor, wherein said machine is constructed as a lifting machine having no chassis, **characterized in that** when the machine (1) is in operating position, the tractor largely bears only the load of the weight of the storage container (10) and the majority of the weight of the connected machine (1) is supported on the end damming device (4) and that a roller for disintegrating the soil is placed before the loosening tool (2).

2. Machine according to one of the previous claims, **characterized in that** the loosening tool (2) is designed as a rotating harrow or as a comb tooth rotor.

3. Machine according to one of the previous claims, **characterized in that** the setting plough (7) is adjustably connected to the end damming device (4), especially a dam-forming sheet metal (14).

4. Machine according to one of the previous claims, **characterized in that** the loosening tool (2) and/or the planting device (3) is placed on the machine (1) in such a way that it can be dismounted or can be detached from the machine (1).

5. Machine according to one of the previous claims, **characterized in that** the supply of plant material (12) in a scoop chamber (21) of the planting device (3) can be controlled depending on the filling level in the scoop chamber (21).

6. Machine according to claim 5, **characterized in that** the planting device (3) has a device for registering the filling level in the scoop chamber (21).

## Revendications

1. Machine agricole combinée (1), comportant un dispositif de plantation (3), en particulier un dispositif planteur de pommes de terre, avec au moins un réservoir (10), un dispositif de prélèvement attribué à ce dernier et un soc planteur (7), un outil de binage (2) disposé devant le dispositif de plantation (3) dans le sens de la circulation pour la préparation du lit de semences, ainsi qu'un dispositif agencé en aval pour la constitution de la butte d'extrémité (4), de préférence une tôle de buttage, sachant que la machine (1) se présente sous la forme d'une machine d'excavation destinée à être attelée à un tracteur, sachant que la machine se présente sous la forme d'une machine d'excavation sans châssis, **caractérisée en ce que** le tracteur ne supporte essentiellement que le poids du réservoir (10) à la position de travail de la machine (1) et la majeure partie du poids de la machine attachée (1) est supportée par le dispositif pour la constitution de la butte d'extrémité (4), et qu'un cylindre est disposé avant l'outil de binage (2) pour concasser la terre.

2. Machine selon l'une des revendications précédentes, **caractérisée en ce que** l'outil de binage (2) se présente sous la forme d'une herse rotative ou sous la forme d'un rotor à dents.

3. Machine selon l'une des revendications précédentes, **caractérisée en ce que** le soc planteur (7) est connecté de manière ajustable avec le dispositif pour la constitution de la butte d'extrémité (4), particulièrement avec une tôle de buttage (14).

4. Machine selon l'une des revendications précédentes, **caractérisée en ce que** l'outil de binage (2) et/ou le dispositif de plantation (3) est disposé de manière à pouvoir être désattelé de la machine (1) ou être démontable de la machine (1).

5. Machine selon l'une des revendications précédentes, **caractérisée en ce que** l'amenée des plants (12) dans un compartiment de prélèvement (21) du dispositif de plantation (3) peut être commandée en fonction du niveau de remplissage du compartiment de prélèvement (21).

6. Machine selon la revendication 5, **caractérisée en ce que** le dispositif de plantation (3) comporte un dispositif pour saisir le niveau de remplissage du compartiment de prélèvement (21).
